# FASCICULE DE BREVET EUROPEEN

(11) **EP 4 429 927 B1**
(45) Date de publication et mention de la délivrance du brevet: **12.08.2026**
(21) Numéro de dépôt: 22813235.3
(22) Date de dépôt: 03.11.2022
(51) Int. Cl.: B60W 50/02, B60W 50/029, B60W 50/038, B60W 50/04, B60W 50/14, B60W 50/023

(54) **MODULE ET PROCÉDÉ D'AIDE À LA CONDUITE D'UN VÉHICULE AUTOMOBILE**
KRAFTFAHRZEUG-FAHRASSISTENZMODUL UND VERFAHREN
MOTOR VEHICLE DRIVING ASSISTANCE MODULE AND METHOD

(30) Priorité: 10.11.2021 FR 2111940
(43) Date de publication de la demande: 18.09.2024
(73) Titulaire: Ampere SAS, 92100 Boulogne-Billancourt (FR)
(72) Inventeur: DEBORNE, Renaud, 78084 Guyancourt cedex (FR); QUILLIARD, Raphael, 78084 Guyancourt cedex (FR)
(74) Mandataire: Renault Group
(86) Numéro de dépôt international: PCT/EP2022/080690
(87) Numéro de publication internationale: WO 2023/083693

(56) Documents cités:
- EP-A1- 3 816 741
- WO-A1-2019/025333
- DE-A1- 102018 130 815

## Description

### Domaine technique de l'invention

La présente invention concerne de manière générale la sécurité dans le domaine automobile.

Elle concerne plus particulièrement un module et un procédé d'aide à la conduite d'un véhicule automobile.

L'invention trouve une application particulièrement avantageuse dans la conception de logiciels sécurisés permettant d'automatiser la conduite de véhicules automobiles.

### Etat de la technique

Les véhicules automobiles modernes comportent plusieurs calculateurs qui offrent une grande quantité de fonctions, dont des fonctions de pilotage autonome ou semi-autonome du véhicule.

Parmi ces fonctions, on peut par exemple citer la fonction de maintien automatique du véhicule au centre de sa voie de circulation, ou la fonction de régulation adaptative de vitesse (qui permet de maintenir la vitesse du véhicule à une vitesse de consigne ou de réguler cette vitesse si la circulation est dense afin de maintenir des distances de sécurité adaptées).

Ces fonctions mettent en œuvre une quantité importante de logiciels, représentant généralement plusieurs millions de lignes de code.

Certaines de ces fonctions sont critiques pour la sécurité du véhicule. Dès lors, les logiciels doivent être développés selon des règles de conception rigoureuses définies par exemple par la norme ISO26262. Le matériel informatique et les capteurs sont également sélectionnés en fonction de cette norme.

Cette norme ISO26262 définit des niveaux d'exigence en matière de sécurité automobile allant du niveau ASIL-A (niveau le moins critique) au niveau ASIL-D (niveau le plus critique).

Pendant la conception du véhicule, il est prévu de développer chaque fonction en respectant le niveau ASIL qui lui est assigné.

Naturellement, plus la fonction est critique, plus le niveau ASIL est élevé, et plus le développement du logiciel s'avère coûteux en termes notamment de temps de développement.

Afin de pouvoir déployer une fonction sur des véhicules alors que le logiciel n'a pas encore été certifié avec le niveau d'ASIL souhaité (et qu'il est donc considéré comme étant encore en cours de développement), le document EP3816741 propose une méthode de vérification de la sortie émise par le logiciel en cours de développement. WO 2019/025333 A1 décrit l'élaboration d'une consigne de supervision fiable pour le pilotage d'un véhicule, reposant sur la fusion de données issues de capteurs multiples et redondants, puis sur la mise en œuvre de diagnostics de cohérence portant sur l'environnement perçu et sur la consigne calculée.

En pratique, ce document enseigne d'envoyer la sortie émise par le logiciel en cours de développement vers un moniteur de sécurité qui répond, lui, à un certain niveau de sécurité.

Ce moniteur va donc lire la sortie et faire de tests sur celle-ci afin de vérifier qu'elle est sûre et qu'elle peut être employée telle quelle. Ces tests consistent par exemple à vérifier que la sortie n'entraînera pas de collision, une instabilité du véhicule, un problème de confort, une accélération trop grande du véhicule...

Si la sortie passe les tests, elle est transmise aux actionneurs. Dans le cas contraire, elle n'est pas transmise.

L'inconvénient de cette solution est qu'elle ne garantit pas un niveau de sécurité suffisant pour être déployée sur des véhicules de série. Au contraire, elle permet seulement de réaliser des essais sur des véhicules de présérie.

### Présentation de l'invention

Afin de remédier à l'inconvénient précité de l'état de la technique, la présente invention propose d'assigner la charge du respect du niveau ASIL sélectionné à une entité logicielle particulière qui, à elle seule, permettra de vérifier que la consigne de pilotage calculée respecte bien des fonctionnalités sélectionnées.

Plus particulièrement, on propose selon l'invention un module d'aide à la conduite d'un véhicule automobile, comportant :
- un bloc (ou « composant logiciel ») principal qui reçoit en entrée un ensemble de données d'entrée relatives au véhicule automobile et à son environnement, et qui fournit en sortie une consigne préliminaire de pilotage du véhicule automobile en fonction des données d'entrée, et
- un bloc (ou « composant logiciel ») de sécurisation de la consigne préliminaire de pilotage qui est distinct du bloc principal, qui reçoit en entrée la consigne préliminaire de pilotage et un ensemble de données de vérification, qui fournit en sortie une consigne finale de pilotage et qui contrôle que la consigne préliminaire de pilotage est conforme à un ensemble d'au moins une règle prédéfinie (également appelées « fonctionnalités »),

dans lequel l'ensemble des données de vérification diffère de l'ensemble des données d'entrée, et
dans lequel chacune des données de vérification présente un niveau de sécurité strictement supérieur à un niveau de sécurité de l'une au moins des données d'entrée.

Ainsi, grâce à l'invention, le bloc de sécurisation peut, en s'appuyant sur les données de vérification dont le niveau de sécurité est jugé suffisant, vérifier que la consigne préliminaire de pilotage peut être employée ou non.

En d'autres termes, le bloc de sécurisation est en mesure de vérifier de manière très fiable que la consigne préliminaire de pilotage satisfait des règles prédéfinies à l'aide de ces données de vérification.

La solution proposée est donc générique et peut donc être employée dans divers domaines de l'automobile.

Elle est peu couteuse en ce sens que le bloc principal n'a pas à être certifié au niveau de sécurité souhaité, seul le bloc de sécurisation doit l'être. Or ce bloc de sécurisation est suffisamment petit pour pouvoir être développé sans nécessiter un temps de développement important. Le bloc de sécurisation permet ainsi de réduire le temps de développement de la fonction et peut alors être appliqué sur la véhicule final (i.e. embarqué dans ce véhicule).

Cette solution permet ainsi de s'assurer que dans 100% des scenarii envisageables, la consigne finale de pilotage sera utilisable sans danger pour le véhicule automobile.

D'autres caractéristiques avantageuses et non limitatives de l'invention, prises individuellement ou selon toutes les combinaisons techniquement possibles, sont les suivantes :
- la consigne finale de pilotage est fonction de la consigne préliminaire de pilotage ;
- la consigne finale de pilotage est égale à la consigne préliminaire de pilotage lorsque la consigne préliminaire de pilotage est conforme aux règles prédéfinies et est sinon égale à une consigne de sécurité prédéterminée ;
- le bloc de sécurisation est adapté à calculer une consigne intermédiaire de pilotage et la consigne finale de pilotage est égale au maximum entre la consigne préliminaire de pilotage et la consigne intermédiaire de pilotage ;
- lorsqu'à un premier instant, la consigne préliminaire de pilotage n'est plus conforme aux règles prédéfinies, chaque composante de la consigne finale de pilotage varie de façon discontinue ;
- lorsqu'à un deuxième instant subséquent, la consigne préliminaire de pilotage redevient conforme aux règles prédéfinies, au moins une composante de la consigne finale de pilotage varie de façon continue ;
- les données de vérification présentent toutes un niveau de sécurité de type ASIL déterminé ;
- au maximum une des données de vérification présente un niveau de sécurité inférieur à celui des autres données de vérification ;
- la consigne finale de pilotage comporte un couple à transmettre à un actionneur d'un groupe motopropulseur ou d'un système de freinage de manière à assurer une fonction de régulation automatique de la vitesse du véhicule automobile ;
- la consigne finale de pilotage comporte un signal d'alerte permettant d'activer une interface Homme-Machine lorsque le conducteur du véhicule automobile n'est plus concentré sur sa conduite et qu'une fonction de maintien du véhicule automobile au centre de sa voie de circulation est activée ;
- le module de sécurisation est adapté à compter le temps passé depuis que le conducteur du véhicule automobile n'est plus concentré sur sa conduite en un nombre entier de cycles.

L'invention concerne aussi un procédé de calcul d'une consigne finale de pilotage d'un équipement de véhicule automobile, comportant :
- la réception par un bloc principal d'un ensemble de données d'entrée relatives au véhicule automobile et à son environnement,
- le calcul par le bloc principal d'une consigne préliminaire de pilotage en fonction des données d'entrée,
- la réception par un bloc de sécurisation distinct du bloc principal de la consigne préliminaire de pilotage et d'un ensemble de données de vérification,
- le calcul de la consigne finale de pilotage, qui comprend le contrôle que la consigne préliminaire de pilotage est conforme à un ensemble d'au moins une règle prédéfinie,
dans lequel l'ensemble des données de vérification diffère de l'ensemble des données d'entrée, et dans lequel chacune des données de vérification présente un niveau de sécurité strictement supérieur à un niveau de sécurité de l'une au moins des données d'entrée.

L'invention concerne également une méthode de conception d'un module dans lequel, le module étant programmé pour mettre en œuvre une fonction de conduite autonome du véhicule automobile, il est prévu des étapes de :
- division de la fonction en au moins deux fonctionnalités distinctes, dont l'une au moins doit présenter un niveau de sécurité supérieur à celui d'au moins une autre fonctionnalité,
- programmation d'un logiciel de mise en œuvre de ladite fonction, en au moins deux blocs dont un premier bloc de sécurisation qui est adapté à mettre en œuvre la fonctionnalité ayant le niveau de sécurité supérieur, ledit premier bloc recevant en entrée les données de vérification, et l'autre bloc recevant en entrée les données d'entrée,
- vérification des résultats fournis par le logiciel en utilisant plusieurs scenarii.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

La description qui va suivre en regard des dessins annexés, donnés à titre d'exemples non limitatifs, fera bien comprendre en quoi consiste l'invention et comment elle peut être réalisée.

Sur les dessins annexés :
[Fig.1] est une vue schématique en perspective d'un véhicule automobile conforme à l'invention ;
[Fig.2] est une vue schématique en blocs d'un logiciel de régulation automatique de la vitesse implanté dans la mémoire du véhicule automobile de la [Fig.1] ;
[Fig.3] est une vue de détail d'un bloc du logiciel de la [Fig.2] ;
[Fig.4] est une vue schématique en blocs d'un logiciel de maintien automatique du véhicule automobile de la [Fig.1] au centre de sa voie de circulation ;
[Fig.5] est un graphique illustrant, de façon synchronisée, les variations dans le temps de trois paramètres du véhicule automobile de la [Fig.1] équipé du logiciel de maintien automatique de la [Fig.4], pendant une phase de désactivation de la fonction de maintien automatique,
[Fig.6] est un graphique illustrant, de façon synchronisée, les variations dans le temps des trois paramètres, pendant une phase de corruption de l'une des entrées du logiciel,
[Fig.7] est un graphique illustrant, de façon synchronisée, les variations dans le temps des trois paramètres, pendant une phase de corruption de l'autre des entrées du logiciel.

### Véhicule

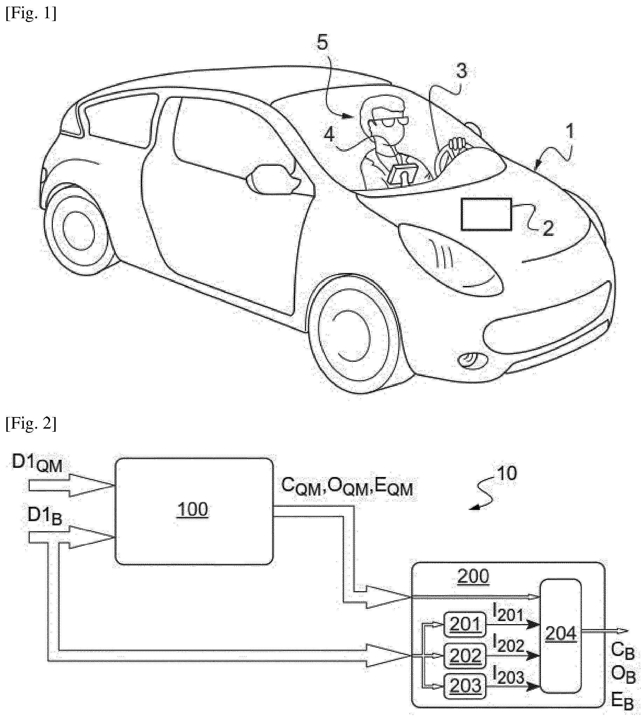

Sur la [Fig.1], on a représenté un véhicule 1 automobile adapté à mettre en œuvre l'invention.

Il s'agit ici d'une voiture. En variante, il pourrait s'agir d'un autre type de véhicule (camion, moto, bus...).

Ici, ce véhicule 1 comporte classiquement un habitacle dans lequel se trouve notamment un siège pour le conducteur 5 du véhicule, une planche de bord et un volant 12.

Ce véhicule 1 comporte un groupe motopropulseur, un système de freinage et un système de direction permettant de faire tourner le véhicule (non visibles sur la figure). Classiquement, le système de direction comporte un actionneur de direction assistée pilotable électroniquement, le groupe motopropulseur comporte un actionneur de commande de moteur pilotable électroniquement, et le système de freinage comporte un actionneur de freinage pilotable électroniquement.

Ce véhicule 1 est en outre équipé d'au moins une interface homme-machine. En pratique, la planche de bord intègre un écran d'affichage 4 et au moins un haut-parleur (non visible).

Le véhicule 1 comporte par ailleurs une unité électronique de traitement 2 qui comporte plusieurs calculateurs (microprocesseurs ou microcontrôleurs), des mémoires et des interfaces d'entrée et de sortie.

Grâce à ses interfaces d'entrée, l'unité électronique de traitement 2 est adaptée à recevoir différentes données d'entrée, qui proviennent de capteurs ou de calculateurs tiers. Ces données d'entrée sont relatives au véhicule automobile (vitesse...), à son environnement intérieur (position du conducteur...) et à son environnement extérieur (position sur la route...).

Elle est notamment adaptée à recevoir :
- une donnée relative à la tenue ou non du volant 3 par le conducteur,
- des images de l'environnement, par exemple acquises par des caméras orientées vers l'avant du véhicule, et
- la vitesse V₁ du véhicule 1 (mesurée par exemple par un capteur situé sur un axe de roue du véhicule).

Grâce à ses interfaces de sortie, l'unité électronique de traitement 2 est adaptée à commander l'interface homme-machine afin de fournir au conducteur des informations. Elle est également adaptée à commander l'actionneur de direction assistée, l'actionneur de commande de moteur, et l'actionneur de freinage.

Grâce à ses mémoires, l'unité électronique de traitement 2 mémorise une application informatique, constituée de programmes d'ordinateur (ou « logiciels ») comprenant des instructions dont l'exécution par les calculateurs permet la mise en œuvre du procédé décrit ci-après.

Dans la suite de cet exposé, on considérera que chaque « logiciel » permet de mettre en œuvre une « fonction » particulière d'aide à la conduite du véhicule.

Ici, on considérera plus particulièrement deux logiciels permettant d'exécuter deux fonctions distinctes de pilotage autonome du véhicule (et notamment de suivi de trajectoire).

L'une de ces fonctions est la régulation automatique de la vitesse du véhicule, dite fonction ACC (de l'anglais « Adaptive Cruise Control »).

L'autre de ces fonctions est le maintien du véhicule au centre de sa voie, dite fonction LCA (de l'anglais « Lane Centering Assist »).

Ces deux fonctions seront bien définies dans la suite de cet exposé.

A ce stade, on pourra noter que chaque logiciel devra être caractérisé par un niveau de sécurité.

Ce niveau de sécurité permet, sur la base d'une analyse de risques, de déterminer dans quelle mesure le logiciel est en mesure de mettre en œuvre la fonction en toute sécurité.

Le « niveau de sécurité » considéré sera ici établi conformément à la norme ISO26262. On parlera alors dans la suite de niveau ASIL (de l'anglais « Automotive Safety Integrity Level »).

Ainsi, un logiciel ayant un niveau de sécurité garanti pourra être classé selon quatre niveaux, du niveau inférieur ASIL-A au niveau supérieur ASIL-D (niveau offrant la plus grande sécurité), en passant dans l'ordre par les niveaux ASIL-B et ASIL-C.

En revanche, un logiciel ne répondant à aucun niveau de sécurité particulier aura un classement « QM ».

On dira alors d'un premier logiciel qu'il a un niveau ASIL supérieur à un autre si son niveau ASIL est classé à un niveau supérieur à celui de cet autre logiciel ou si cet autre logiciel est classé « QM ».

On notera aussi que des données pourront être certifiées par un niveau de sécurité. Ce niveau de sécurité sera ici encore défini par la norme précitée. Ainsi, dans la suite, on pourra caractériser une donnée par son niveau ASIL.

### Cadre de l'invention

L'invention propos de simplifier la conception et le développement des logiciels d'aide à la conduite du véhicule automobile, tout en leur assurant un niveau ASIL conforme au cahier des charges.

Pour cela, il est proposé d'isoler, dans le logiciel permettant d'exécuter la fonction d'aide à la conduite visée, une ou plusieurs fonctionnalités nécessitant effectivement d'être développées avec le niveau ASIL requis.

Dès lors, le logiciel mettant en œuvre la fonction d'aide à la conduite est scindé en deux composants logiciel distincts, dont un « composant sécurité » qui est entièrement codé de manière à présenter le niveau ASIL requis et un autre composant qui est codé avec un niveau ASIL inférieur (voire qui est classé QM) et qui est adapté à élaborer une consigne pour le pilotage autonome du véhicule.

Le composant sécurité est préférentiellement défini de telle sorte que ses entrées répondent tous au niveau ASIL requis.

Mais il peut arriver qu'une partie seulement de ces entrées ne répondent pas à ce niveau de sécurité. Dans cette éventualité, il est prévu de consolider cette entrée, c'est-à-dire de la rendre plus fiable et plus robuste, en utilisant une autre entrée (dont le niveau de sécurité peut être ou non du niveau ASIL requis). Pour cela, il est possible d'utiliser des mécanismes permettant de limiter les impacts sur le niveau ASIL. Un tel mécanisme peut consister en un moyen de détection de risque d'erreur, un système de régulation en boucle ouverte ou fermée...

De manière préférentielle, le composant sécurité est codé de manière à n'exécuter que les fonctionnalités nécessitant effectivement d'être développées avec le niveau de sécurité ASIL requis. Toutes les autres fonctionnalités sont alors situées dans l'autre composant. En effet, le composant sécurité doit être contrôlé de manière précise afin d'être certifié avec le niveau ASIL souhaité, si bien que plus sa taille est réduite, plus sa certification sera facile.

Une fois les composants logiciels définis, il est prévu de créer des scenarii de certification au niveau ASIL souhaité de l'ensemble de la fonction d'aide à la conduite. Ces scenarii sont préférentiellement développés pour valider ce niveau ASIL dans les cas extrêmes, de façon à réduire le nombre de scenarii à envisager.

Il est ainsi possible de connaître la couverture du modèle choisi, c'est-à-dire le pourcentage de scenarii validés. L'objectif est que l'ensemble des scenarii soient validés, pour que l'ensemble des fonctionnalités soient garanties.

### Fonction ACC

On peut s'intéresser à un premier exemple d'application de l'invention.

Dans ce premier exemple, la fonction concernée est la fonction ACC de régulation automatique de la vitesse du véhicule.

Grâce à cette fonction, le conducteur peut sélectionner une consigne de vitesse. Il peut par exemple s'agir d'une vitesse particulière (telle que 80 km/h), ou d'une requête indiquant au véhicule de rouler si possible à la vitesse maximum autorisée sur la voie de circulation empruntée. Sur la base de cette consigne de vitesse et des données issues de capteurs embarqués dans le véhicule, la fonction ACC permet de calculer des consignes de pilotage de l'actionneur de commande du moteur et de l'actionneur de freinage. Ces consignes sont calculées de façon à réguler la vitesse du véhicule soit à la consigne de vitesse tant qu'aucun véhicule tiers ne précède de trop près le véhicule 1, soit à une vitesse réduite qui dépend de la vitesse du véhicule tiers qui le précède, de manière à conserver avec celui-ci une distance de sécurité acceptable.

Une telle fonction ACC est implémentée en utilisant en entrée des données relatives au véhicule automobile 1 et à son environnement (vitesse, consigne de vitesse, distance au véhicule précédent, vitesse du véhicule précédent...), et elle permet de fournir en sortie au moins une consigne de pilotage à transmettre aux actionneurs.

Cette fonction est codée dans un module (ci-après appelé logiciel ACC 10) et est matériellement exécutée par un unique calculateur, bien qu'en variante, plusieurs calculateurs pourraient être employés.

Ce logiciel ACC 10 assurant le respect d'objectifs de sécurité, il doit être certifié à un niveau ASIL particulier, ici le niveau ASIL-B.

Comme le montre la [Fig.2], il reçoit des données d'entrée D1_{B}, D1_{QM} relatives au véhicule et à son environnement qui sont de deux types. Les données d'entrée D1_{B} du premier type présentent un niveau de sécurité ASIL-B tandis que les données d'entrée D1_{QM} du second type présentent un niveau de sécurité inférieur (ASIL-A ou QM).

Il fournit en sortie une consigne de pilotage devant répondre au niveau de sécurité ASIL-B.

Cette consigne de pilotage comporte au moins une information, à savoir une requête de couple que le moteur ou le système de freinage doit fournir pour réguler la vitesse du véhicule.

Ici, on considérera qu'elle comporte trois composantes, à savoir une requête de couple C_{B}, un ordre de couple O_{B} et un état E_{B} de la fonction ACC.

La requête de couple C_{B} représente le couple, en N.m (Newton mètre), à exercer au niveau des roues du véhicule pour réguler sa vitesse.

L'ordre de couple O_{B} est un indicateur binaire dont la valeur indique si le moteur et les moyens de freinage doivent exercer un couple ou non.

Enfin, l'état E_{B} indique la situation courante de la fonction ACC. Il peut prendre différentes valeurs, par exemple ici les valeurs « allumée », « éteinte », « régulation », « attente d'appui sur un bouton » et « défaillance ».

La valeur « allumé » correspond à un état dans lequel la fonction ACC est prête à démarrer mais n'est pas activée.

La valeur « éteinte » correspond à un état dans lequel la fonction ACC est désactivée.

La valeur « régulation » correspond à un état dans lequel la fonction ACC est activée et pilote la vitesse du véhicule.

La valeur « attente d'appui sur un bouton » correspond à un état dans lequel la fonction ACC attend que le conducteur appuie sur un bouton pour continuer à piloter la vitesse du véhicule.

La valeur « défaillance » correspond à un état dans lequel il a été détecté un problème dans le fonctionnement de la fonction ACC, si bien qu'elle est désactivée.

Le logiciel ACC 10 s'avère particulièrement complexe à écrire. Dans le cadre de l'invention, il est donc prévu d'isoler dans l'ensemble de la fonction ACC la ou les fonctionnalités devant être certifiée au niveau ASIL-B.

Ici, la première fonctionnalité permet d'empêcher le véhicule d'accélérer au-delà d'un seuil défini, issu d'une norme ou de connaissances métiers. En d'autres termes, cette fonctionnalité consiste à inhiber toute requête de couple-moteur lorsque que le véhicule se retrouve en situation de suraccélération.

La deuxième fonctionnalité vise à garantir le confort des passagers du véhicule lors des phases d'activation et de désactivation de la première fonctionnalité. En d'autres termes, elle consiste à éviter que le respect du seuil précité ne produise un désagrément quelconque pour le conducteur (secousse, à-coup suite à la désinhibition des requêtes de couple-moteur).

La troisième fonctionnalité permet de contrôler que les informations diffusées par la fonction ACC ne comportent pas d'incohérence. Typiquement, cette fonctionnalité permet de vérifier que lorsque la requête de couple est non nulle, l'ordre de couple l'est également. Elle permet aussi de contrôler que lorsque le conducteur appuie sur un bouton requérant l'arrêt de la fonction ACC (typiquement sur la pédale de frein), la requête de couple est nulle.

Vérifier que ces trois fonctionnalités ont le niveau ASIL souhaité permet de s'assurer que même en cas de défaillance, la fonction ACC fonctionne en toute sécurité.

Selon l'invention, ces trois fonctionnalités, et elles seules, sont codées dans le composant sécurité 200. En revanche, l'ensemble des autres fonctionnalités de la fonction ACC sont codées dans un autre bloc logiciel, ci-après appelé composant ACC 100.

Le composant ACC 100 étant bien connu de l'Homme du métier, il ne sera pas ici décrit. On précisera seulement qu'il est programmé pour élaborer, sur la base des données d'entrée D1_{QM}, D1_{B} précitées, au moins une consigne préliminaire de pilotage.

Cette consigne préliminaire de pilotage comporte trois informations, à savoir une requête de couple préliminaire C_{QM}, un ordre de couple préliminaire O_{QM}, et un état préliminaire E_{QM} de la fonction ACC. Ces trois informations sont calculées compte tenu des données d'entrée, de façon à être le plus fiables possibles.

Toutefois, ces trois informations sont classées QM puisque le composant ACC 100 n'est pas certifié ASIL-B.

Le composant sécurité 200 est alors conçu pour valider ces informations, ou pour les modifier, afin de pouvoir transmettre des informations certifiées ASIL-B (à savoir la requête de couple C_{B}, l'ordre de couple O_{B} et l'état E_{B} de la fonction ACC).

Le composant sécurité 200 comportant beaucoup moins de lignes de code que le composant ACC 100, il peut plus facilement être certifié ASIL-B.

Le composant sécurité 200 reçoit en entrée la requête de couple préliminaire C_{QM}, l'ordre de couple préliminaire O_{QM}, et l'état préliminaire E_{QM} issus du composant ACC 100. Il reçoit également des données de vérification D1_{B}.

Ces données de vérification D1_{B} sont choisies parmi les données d'entrée de telle sorte qu'elles présentent toutes un niveau de sécurité certifié ASIL-B. De cette manière, le composant sécurité 200 ne traite pas les données d'entrée D1_{QM} ayant un niveau de sécurité inférieur.

Comme le montre la [Fig.2], le bloc sécurité 200 traite les données de vérification D1 _{B} par trois sous-blocs 201, 202, 203 qui sont associés aux trois fonctionnalités et qui sont capables de détecter respectivement une suraccélération, un appui du conducteur sur un moyen de désactivation de la fonction ACC, et un défaut interne.

Ainsi, chaque sous-bloc est en mesure de fournir une information de détection de problème I₂₀₁, I₂₀₂, I₂₀₃, qui prend la valeur « 0 » tant qu'aucun problème n'est détecté, et la valeur « 1 » sinon.

Ces informations de détection de problème I₂₀₁, I₂₀₂, I₂₀₃ sont transmises, au même titre que les trois informations précitées (requête de couple préliminaire C_{QM}, ordre de couple préliminaire O_{QM}, et état préliminaire E_{QM}), à un quatrième sous-bloc 204.

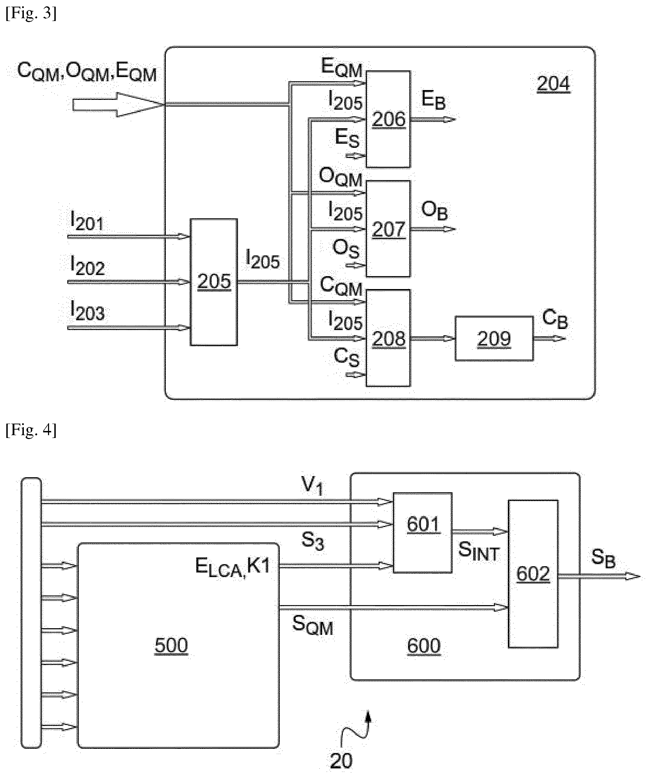

Ce quatrième sous-bloc 204 est illustré en détail sur la [Fig.3].

On y observe qu'il comporte un comparateur 205, trois filtres 206, 207, 208, et une unité de gestion des transitions 209.

Le comparateur 205 reçoit en entrée les informations de détection de problème I₂₀₁, I ₂₀₂, I₂₀₃. Il est ainsi conçu pour détecter si l'une des première et troisième fonctionnalités n'est pas respectée.

En pratique, il s'agit d'un composant qui permet de déterminer le maximum des trois informations de détection I₂₀₁, I₂₀₂, I₂₀₃. Il est donc conçu pour fournir une donnée I₂₀₅ qui prend la valeur « 0 » tant qu'aucun problème n'est détecté, et la valeur « 1 » sinon.

Cette donnée est transmise à chacun de filtres 206, 207, 208.

Ces filtres vont permettre de filtrer la requête de couple préliminaire C_{QM}, l'ordre de couple préliminaire O_{QM}, et l'état préliminaire E_{QM} de la fonction ACC, de les certifier au niveau de sécurité ASIL-B.

Pour cela, en l'absence de problème (I₂₀₅=0), les trois filtres considèrent respectivement que :
- la requête de couple C_{B} est égale à la requête de couple préliminaire C_{QM},
- l'ordre de couple O_{B} est égale à l'ordre de couple préliminaire O_{QM}, et
- l'état E_{B} de la fonction ACC sécurisé est égale à l'état préliminaire E_{QM}.

En revanche, en cas de problème (I₂₀₅=1), les trois filtres considèrent respectivement que :
- la requête de couple C_{B} est égale à une requête de couple de sécurité C_{S} prédéfinie,
- l'ordre de couple O_{B} est égale à un ordre de couple de sécurité O_{S} prédéfini, et
- l'état E_{B} de la fonction ACC sécurisé est égal à un état de sécurité E_{S} prédéfini.

En d'autres termes, en cas de problème, il est prévu de ne pas tenir compte des consignes préliminaires pour piloter les actionneurs, mais il est plutôt prévu d'affecter des valeurs de sécurité aux données transmises à ces actionneurs. Ces valeurs de sécurité sont stockées dans la mémoire du calculateur.

A titre d'exemple, la requête de couple de sécurité peut être choisie égale à 0 N.m. L'ordre de couple de sécurité peut être choisi égal à 0 (pas de couple de freinage ni de couple moteur). L'état de sécurité de la fonction ACC peut être considéré « en défaillance ».

Lors de l'apparition d'un problème (à l'instant où I₂₀₅ passe de 0 à 1), les requête de couple C_{B}, ordre de couple O_{B} et état E_{B} sont modifiés immédiatement pour éviter que la fonction ACC reste active et continuer de réguler la vitesse du véhicule.

Lorsque le problème disparait (à l'instant où I₂₀₅ passe de 1 à 0), les ordres de couple O_{B} et état E_{B} peuvent être modifiés brutalement.

En revanche, de préférence, la requête de couple C_{B} est plutôt modifiée pour varier continument. Pour cela, l'unité de gestion des transitions 209 est conçue pour assurer une transition plus douce du couple, qui ne variera pas brutalement pour assurer un meilleur confort aux passagers.

En résumé, le composant sécurité 200 permet de sécuriser la fonction ACC quelles que soient les conditions de roulage, non pas en sécurisant au niveau ASIL-B l'ensemble de la fonction, mais seulement une partie de celle-ci.

La solution étant donc bien identifiée et codée, elle doit être testée sur un ensemble de scenarii afin d'en contrôler le bon fonctionnement.

Ces scenarii permettent notamment de vérifier qu'en cas de suraccélération, alors que la consigne de couple préliminaire C_{QM} reste à une valeur élevée, la consigne de couple C_{B} filtrée se réduise bien, ici à 0 N.m, tout le temps de la suraccélération.

Pour réduire le nombre de scenarii à considérer, il est possible de contrôler le bon fonctionnement de la fonction ACC pour une suraccélération très légère et pour une suraccélération très forte (ce qui représente deux cas extrêmes).

D'autres scenarii sont également envisagés, par exemple des cas d'incohérences entre les données d'entrée, et des cas d'appui par le conducteur sur un bouton déconnectant la fonction ACC.

### Fonction LCA

On peut maintenant s'intéresser à un deuxième exemple d'application de l'invention illustré sur la [Fig.4].

Dans ce deuxième exemple, la fonction concernée est la fonction LCA de maintien du véhicule au centre de sa voie de circulation.

Cette fonction permet de piloter de manière automatique la direction du véhicule de manière que ce dernier reste centré sur sa voie de circulation, pour autant que le conducteur reste concentré sur la route.

Cette fonction est codée dans un logiciel (ci-après appelé logiciel LCA 20) et est matériellement exécutée par un unique calculateur, bien qu'en variante, plusieurs calculateurs pourraient être employés.

Ce logiciel LCA 20 comporte plusieurs modules, dont un module de calcul de la trajectoire du véhicule, et un module de surveillance de l'attention du conducteur (ci-après appelé module HOD).

Le module de calcul de la trajectoire permet de déterminer une consigne d'angle de braquage à appliquer aux roues directrices, puis d'en déduire une consigne de couple de braquage à envoyer à l'actionneur de direction assistée.

Cette consigne de couple de braquage est toutefois modulée, au moins pour tenir compte de la volonté du conducteur. Ainsi, si le conducteur exerce sur le volant un couple en sens opposé à celui calculé par la fonction LCA, il est prévu de progressivement diminuer le couple exercé par l'actionneur pour ne pas aller à l'encontre de la volonté exprimée par le conducteur. En pratique, la consigne de couple calculée est multipliée par un gain K1, dont la valeur est comprise entre 0 et 100% et permet de tenir compte de cette volonté.

Ainsi, la consigne de couple calculée peut différer de la consigne de couple effective (celle reçue par l'actionneur de direction assistée). De la même façon, la consigne d'angle de braquage calculée peut différer de l'angle de braquage effectif des roues.

De son côté, le module HOD est programmé pour détecter si le conducteur a bien les mains sur son volant 3 puis, si tel n'est pas le cas, pour déclencher des alertes visuelles et sonores qui varient en fonction de la durée passée depuis le dernier instant où le conducteur tenait le volant en main.

Plus précisément, ce module HOD permet de déterminer un niveau d'alerte, ici compris entre 0 et 4, sur la base duquel des alertes sont émises à l'attention du conducteur afin de lui rappeler qu'il doit rester concentré sur la route.

Ici, ce niveau d'alerte reste égal à 0 tant que le conducteur a les mains sur le volant, puis il augmente progressivement quand le conducteur a lâché le volant, en fonction du temps passé depuis le dernier instant où il avait le volant en mains.

A titre d'exemple, un niveau d'alerte égal à 1 peut correspondre à l'émission d'une alerte visuelle sur l'écran d'affichage, un niveau d'alerte égal à 2 peut correspondre à une combinaison d'alertes visuelle et sonore émise par les haut-parleurs, un niveau d'alerte égal à 3 peut correspondre à une combinaison d'alertes visuelle, sonore et haptique (telle que des à-coups de freinage).

Bien entendu, le calcul de ce niveau d'alerte n'a de sens que lorsque la fonction LCA est activée. Par ailleurs ce niveau d'alerte ne doit être considéré que si la vitesse du véhicule est supérieure à un seuil, ici non nul (par exemple égal à 5 km/h).

En résumé, le module HOD est implémenté en utilisant des données d'entrée relatives au véhicule automobile 1 (vitesse, fonction LCA active ou non) et au conducteur (a-t-il le volant en main ?), et permet de fournir en sortie au moins une consigne de pilotage de l'interface Homme-Machine pour générer une alerte ou une combinaison d'alertes.

Cette consigne de pilotage sera appelée ci-après consigne d'alerte, et elle sera en pratique formée par un nombre entier compris entre 0 et 4 et correspondant au niveau d'alerte.

Dans ce contexte, il est souhaité que l'émission des alertes réponde à un niveau de sécurité ASIL-B, en ce sens que le défaut de tenue du volant doit toujours générer l'émission progressive d'alertes (en d'autres termes, il ne doit y avoir aucun faux-positif).

Ici, comme cela apparaîtra clairement à la suite de cet exposé, on peut en revanche tolérer que des alertes puissent être émises de manière intempestive (en d'autres termes, il peut y avoir des faux-négatifs).

Dans cet exemple, la fonctionnalité requérant un niveau de sécurité ASIL-B est donc l'émission des alertes par le module HOD.

Comme dans le premier exemple d'application de l'invention, il est ici prévu de scinder la fonction LCA en deux blocs (ou « composants logiciels »).

Un premier bloc (ci-après appelé « composant LCA 500 ») comprend au moins la fonctionnalité consistant à calculer la trajectoire du véhicule. En pratique, le composant LCA 500 utilisé est un composant logiciel standard qui permet alors non seulement de calculer la trajectoire du véhicule automobile 1, mais aussi de déterminer une consigne préliminaire d'alerte S_{QM}.

Ce composant LCA 500 est classé QM, au même titre que la consigne préliminaire d'alerte S_{QM}. Il reçoit en entrée une grande variété de signaux d'entrée, dont certains sont classés QM.

Le second bloc (ci-après appelé « composant sécurité 600 ») est quant à lui conçu pour n'implémenter que les fonctionnalités devant être certifiées au niveau de sécurité ASIL souhaité (dans cet exemple le niveau ASIL-B). Par conséquent, ce composant sécurité 600 comprend uniquement le module HOD.

Ce composant sécurité 600 reçoit en entrée (depuis le composant LCA 500 ou depuis d'autres calculateurs ou capteurs), les trois données de vérification que sont :
- la vitesse V₁ du véhicule automobile 1,
- le statut S₃ des mains sur le volant (tenu ou lâché), et
- l'état E_{LCA} de la fonction LCA (par exemple « actif » ou « inactif » ou « transition » ou « erreur »).

Ici, la vitesse V₁ et le statut S₃ sont obtenus au moyen de capteurs et de logiciels répondant au niveau de sécurité souhaité (ASIL-B). En revanche, l'état E_{LCA} ne répond pas à ce niveau et est classé QM.

Dès lors, le composant de sécurité 600 ne peut pas élaborer sur la base de ces trois données une consigne finale d'alerte S_{B} répondant au niveau de sécurité ASIL-B.

Ici, il est alors prévu de compléter ou de remplacer le signal d'état E_{LCA} par une autre donnée indiquant de manière plus fiable si la fonction LCA est active ou non.

Dans un premier mode de réalisation, cette autre donnée est formée par la différence entre la consigne d'angle de braquage et l'angle de braquage effectif mesuré au niveau des roues. En effet, cette donnée permet de déterminer dans quelle mesure la trajectoire de la voiture correspond à la trajectoire calculée par la fonction LCA.

Dans un second mode de réalisation qui est plus fiable encore, cette autre donnée est relative à l'écart entre la consigne de couple de braquage et le couple de braquage effectif (celui reçu par l'actionneur de direction assistée). En pratique, cette autre donnée est ici égale au gain K1 précité.

Alors, pour calculer le niveau d'alerte, le composant sécurité 600 utilise son horloge interne et se base sur les trois données suivantes :
- la vitesse V₁ du véhicule automobile 1,
- le statut S₃ des mains sur le volant (tenu ou lâché), et
- le gain K1.

Bien que le gain K1 ne soit pas nécessairement spécifié avec le niveau de sécurité ASIL-B, son calcul qui est simple et qui se base sur des données fiables assure à sa valeur une fiabilité suffisante.

De cette façon, un sous-bloc 601 est en mesure de calculer une consigne d'alerte intermédiaire S_{INT} fiable sur la base des trois données de vérification.

Pour rendre cette consigne plus robuste encore afin d'obtenir la consigne finale d'alerte S_{B}, le composant sécurité 600 comprend un comparateur 602 qui est adapté à contrôler la cohérence entre cette consigne d'alerte intermédiaire S_{INT} et la consigne préliminaire d'alerte S_{QM} calculée par le composant LCA 500, dont on rappelle qu'elle est classée QM.

En pratique, le comparateur 602 retient, parmi ces deux consignes d'alerte, celle qui a la plus grande valeur. Ainsi, le composant sécurité 600 est adapté à élaborer une consigne finale d'alerte S_{B} robuste.

On notera ici que l'horloge permettra de compter le temps passé depuis que le conducteur 5 du véhicule automobile 1 n'est plus concentré sur sa conduite (plus précisément ici depuis qu'il n'a plus les mains sur son volant) non pas en un nombre décimal (correspondant au temps passé en secondes), mais en un nombre entier correspondant au nombre de cycles de calcul. Le calculateur est en effet programmé pour fonctionner à une fréquence donnée, si bien qu'il est possible de compter le nombre de fois successives où il a été détecté que le conducteur n'avait pas les mains sur son volant. Utiliser un nombre entier dans les calculs (pour la fonction LCA comme pour la fonction ACC) permet avantageusement d'obtenir des résultats plus fiables. En effet, un nombre décimal peut présenter un nombre indéfini de décimales, lesquelles ne seront pas toutes prises en compte dans les calculs ce qui peut amener à des imprécisions.

### Figures 5 à 7

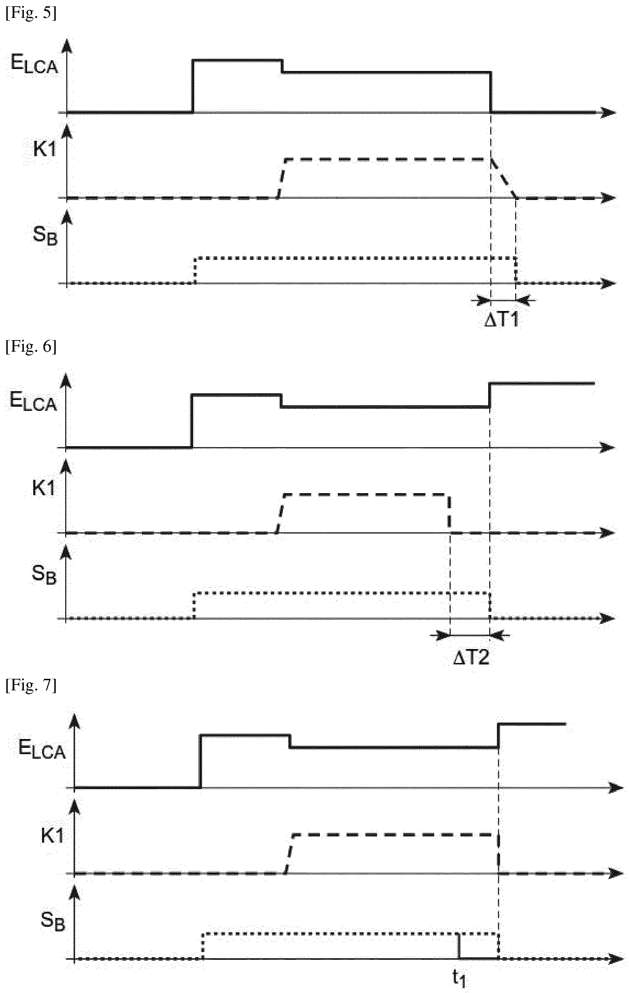

Sur les figures 5 à 7, on a illustré les variations dans le temps de plusieurs paramètres, qui permettent de montrer que le calcul de la consigne d'alerte est effectivement robuste.

Sur chacune de ces figures, le premier graphique (du haut) représente la variation de l'état E_{LCA} de la fonction LCA. Le second graphique représente l'évolution du gain K1. Enfin, le dernier graphique (du bas) représente la variation de la consigne d'alerte S_{B}.

Ces graphiques sont établis pour répondre à des scenarii de certification de la fonction LCA au niveau de sécurité ASIL-B, en considérant que le conducteur ne tient pas le volant.

Sur la [Fig.5], on a représenté un cas dans lequel l'ensemble des données reçues par le composant sécurité 600 sont fiables.

On y observe tout d'abord que la fonction LCA passe successivement d'un état E_{LCA} « inactif », à « en transition » puis « actif » puis « inactif »

Au moment où la fonction LCA s'active, le gain K1 augmente progressivement jusqu'à 100%.

Au moment où la fonction LCA s'inactive, le gain K1 diminue progressivement jusqu'à 0%.

Grâce au comparateur 602, on observe que la consigne d'alerte S_{B} augmente dès le début de la transition de l'état inactif à actif de la fonction LCA.

Du fait de la baisse progressive du gain K1, on observe que la consigne d'alerte S_{B} reste non nulle pendant une durée ΔT1 alors qu'elle devrait être égale à zéro. Cette erreur de courte durée ne crée pas de faux-positif mais un faux-négatif momentané, qui est sans conséquence sur la sécurité du véhicule.

Sur la [Fig.6], on a représenté un cas dans lequel la valeur du gain K1 est corrompue alors que l'état E_{LCA} est fiable.

On y observe tout d'abord que la fonction LCA passe successivement d'un état E_{LCA} « inactif », à « en transition » puis « actif » puis « erreur ».

Au moment où la fonction LCA s'active, le gain K1 augmente progressivement jusqu'à 100% puis, pour une raison indéterminée, il passe brutalement à 0%.

Grâce au comparateur 602, on observe que la consigne d'alerte S_{B} augmente dès le début de la transition de l'état inactif à actif de la fonction LCA et reste à une valeur non nulle tant que l'état E_{LCA} est « actif ». Dès lors, l'émission des alertes peut se produire comme prévu, malgré la baisse erronée du gain K1.

Sur la [Fig.7], on a représenté un cas dans lequel la valeur du gain K1 est fiable alors que l'autre consigne d'alerte S_{QM} est corrompue (l'état E_{LCA} représenté est en revanche correct).

On y observe tout d'abord que la fonction LCA passe successivement d'un état E_{LCA} « inactif », à « en transition » puis « actif » puis « erreur ».

Au moment où la fonction LCA s'active, le gain K1 augmente progressivement jusqu'à 100% puis il passe plus tard à 0%.

Alors que le gain K1 est à 100%, la consigne d'alerte préliminaire S_{QM} (non représentée) tombe à 0, à un instant t1.

Grâce au comparateur 602, on observe que la consigne d'alerte S_{B} augmente dès le début de la transition de l'état inactif à actif de la fonction LCA et reste à une valeur non nulle tant que le gain K1 est non nul. Dès lors, l'émission des alertes peut se produire comme prévu, malgré la baisse erronée de la consigne d'alerte préliminaire S QM.

## Revendications

1. Module (10 ; 20) d'aide à la conduite d'un véhicule automobile (1), comportant :
- un bloc principal (100 ; 500) qui reçoit en entrée un ensemble de données d'entrée (D1_{QM}, D1_{B}) relatives au véhicule automobile et à son environnement, et qui fournit en sortie une consigne préliminaire de pilotage (C_{QM}, O_{QM}, E_{QM} ; S_{QM}) du véhicule automobile (1) en fonction des données d'entrée (D1_{QM}, D1_{B}), et
- un bloc de sécurisation (200 ; 600) de la consigne préliminaire de pilotage (C_{QM}, O_{QM}, E_{QM} ; S_{QM}) qui est distinct du bloc principal (100 ; 500), qui reçoit en entrée la consigne préliminaire de pilotage (C_{QM}, O_{QM} , E_{QM} ; S_{QM}) et un ensemble de données de vérification (D1_{B} ; V₁, S₃), qui fournit en sortie une consigne finale de pilotage (C_{B}, O_{B}, E_{B} ; S_{B}) et qui contrôle que la consigne préliminaire de pilotage (C_{QM}, O_{QM}, E_{QM} ; S _{QM}) est conforme à un ensemble d'au moins une règle prédéfinie,
dans lequel l'ensemble des données de vérification (D1_{B}) diffère de l'ensemble des données d'entrée (D1_{QM}, D1_{B}), et **caractérisé en ce que** chacune des données de vérification (D1_{B} ; V₁, S₃) présente un niveau de sécurité strictement supérieur à un niveau de sécurité de l'une au moins des données d'entrée (D1_{QM}, D1_{B}).

2. Module (10) conforme à la revendication 1, dans lequel la consigne finale de pilotage (C_{B}, O_{B}, E_{B}) est égale à la consigne préliminaire de pilotage (C_{QM}, O_{QM}, E_{QM}) lorsque la consigne préliminaire de pilotage (C _{QM}, O_{QM}, E_{QM}) est conforme aux règles prédéfinies et est sinon égale à une consigne de sécurité (C_{S}, O_{S}, E_{S}) prédéterminée.

3. Module (20) conforme à la revendication 1, dans lequel le bloc de sécurisation (600) est adapté à calculer une consigne intermédiaire de pilotage (S_{INT}) et dans lequel la consigne finale de pilotage (S_{B}) est égale au maximum entre la consigne préliminaire de pilotage (S_{QM}) et la consigne intermédiaire de pilotage (S_{INT}).

4. Module (10) conforme à l'une des revendications précédentes, dans lequel :
- lorsqu'à un premier instant, la consigne préliminaire de pilotage (C_{QM}, O_{QM}, E_{QM}) n'est plus conforme aux règles prédéfinies, chaque
composante de la consigne finale de pilotage (C_{B}, O_{B}, E_{B}) varie de façon discontinue, et
- lorsqu'à un deuxième instant subséquent, la consigne préliminaire de pilotage (C_{QM}, O_{QM}, E_{QM}) redevient conforme aux règles prédéfinies, au moins une composante de la consigne finale de pilotage (C_{B}, O_{B}, E_{B}) varie de façon continue.

5. Module (10 ; 20) conforme à l'une des revendications 1 à 4, dans lequel les données de vérification (D1_{B} ; V₁, S₃) présentent toutes un niveau de sécurité de type ASIL déterminé.

6. Module (10) conforme à l'une des revendications 1 à 4, dans lequel au maximum une des données de vérification présente un niveau de sécurité inférieur à celui des autres données de vérification.

7. Module (10) conforme à l'une des revendications 1 à 6, dans lequel la consigne finale de pilotage (C_{B}, O_{B}, E_{B}) comporte un couple (C_{B}) à transmettre à un actionneur d'un groupe motopropulseur ou d'un système de freinage de manière à assurer une fonction de régulation automatique de la vitesse du véhicule automobile (1).

8. Module (20) conforme à l'une des revendications 1 à 6, dans lequel la consigne finale de pilotage (S_{B}) comporte un signal d'alerte (S_{B}) permettant d'activer une interface Homme-Machine lorsque le conducteur (5) du véhicule automobile (1) n'est plus concentré sur sa conduite et qu'une fonction de maintien du véhicule automobile (1) au centre de sa voie de circulation est activée.

9. Module (10 ; 20) conforme à l'une des revendications 1 à 8, dans lequel le module de sécurisation est adapté à compter le temps passé depuis que le conducteur (5) du véhicule automobile (1) n'est plus concentré sur sa conduite en un nombre entier de cycles.

10. Procédé de calcul d'une consigne finale de pilotage (C_{B}, O_{B}, E_{B} ; S_{B}) d'un équipement de véhicule automobile (1), comportant :
- la réception par un bloc principal (100 ; 500) d'un ensemble de données d'entrée (D1_{QM}, D1_{B}) relatives au véhicule automobile et à son environnement,
- le calcul par le bloc principal (100 ; 500) d'une consigne préliminaire de pilotage (C_{QM}, O_{QM}, E_{QM} ; S_{QM}) en fonction des données d'entrée (D1 _{QM}, D1_{B}),
- la réception par un bloc de sécurisation (200 ; 600) distinct du bloc principal (100 ; 500) de la consigne préliminaire de pilotage (C_{QM}, O_{QM}, E_{QM} ; S_{QM}) et d'un ensemble de données de vérification (D1_{B} ; V₁, S₃),
- le calcul de la consigne finale de pilotage (C_{B}, O_{B}, E_{B} ; S_{B}), qui comprend le contrôle que la consigne préliminaire de pilotage (C_{QM}, O_{QM} , E_{QM} ; S_{QM}) est conforme à un ensemble d'au moins une règle prédéfinie,
dans lequel l'ensemble des données de vérification (D1_{B}) diffère de l'ensemble des données d'entrée (D1_{QM}, D1_{B}), et **caractérisé**
**en ce que** chacune des données de vérification (D1_{B} ; V₁, S₃) présente un niveau de sécurité strictement supérieur à un niveau de sécurité de l'une au moins des données d'entrée (D1_{QM}, D1_{B}).

## Patentansprüche

1. Fahrassistenzmodul (10; 20) eines Kraftfahrzeugs (1), umfassend:
- einen Hauptblock (100; 500), der im Eingang einen Satz von Eingangsdaten (D1_{QM}, D1_{B}) empfängt, die sich auf das Kraftfahrzeug und sein Umfeld beziehen, und der im Ausgang einen vorläufigen Steuerungssollwert (C_{QM}, O_{QM}, E_{QM}; S_{QM}) zur Steuerung des Kraftfahrzeugs (1) in Abhängigkeit von den Eingangsdaten (D1_{QM}, D1_{B}) liefert, und
- einen Sicherungsblock (200; 600) zur Sicherung des vorläufigen Steuerungssollwerts (C_{QM}, O_{QM}, E_{QM}; S_{QM}), der von dem Hauptblock (100; 500) verschieden ist, der im Eingang den vorläufigen Steuerungssollwert (C_{QM}, O_{QM}, E_{QM}; S_{QM}) und einen Satz von Prüfdaten (D1_{B}; V₁, S₃) empfängt, der im Ausgang einen endgültigen Steuerungssollwert (C_{B}, O_{B}, E_{B}; S_{B}) liefert und der kontrolliert, dass der vorläufige Steuerungssollwert (C_{QM}, O_{QM}, E_{QM}; S_{QM}) einem Satz aus mindestens einer vordefinierten Regel entspricht,
wobei sich der Satz der Prüfdaten (D1_{B}) von dem Satz der Eingangsdaten (D1_{QM}, D1_{B}) unterscheidet, und **dadurch gekennzeichnet, dass** jedes der Prüfdaten (D1_{B}; V₁, S₃) einen Sicherheitslevel aufweist, der strikt größer als ein Sicherheitslevel mindestens eines der Eingangsdaten (D1_{QM}, D1_{B}) ist.

2. Modul (10) nach Anspruch 1, wobei der endgültige Steuerungssollwert (C_{B}, O_{B}, E_{B}) gleich dem vorläufigen Steuerungssollwert (C_{QM}, O_{QM}, E_{QM}) ist, wenn der vorläufige Steuerungssollwert (C_{QM}, O_{QM}, E_{QM}) den vordefinierten Regeln entspricht und ansonsten gleich einem vorbestimmten Sicherheitssollwert (C_{S}, O_{S}, E_{S}) ist.

3. Modul (20) nach Anspruch 1, wobei der Sicherungsblock (600) dazu angepasst ist, einen Zwischensteuerungssollwert (S_{INT}) zu berechnen, und wobei der endgültige Steuerungssollwert (S_{B}) gleich dem Maximum zwischen dem vorläufigen Steuerungssollwert (S_{QM}) und dem Zwischensteuerungssollwert (S_{INT}) ist.

4. Modul (10) nach einem der vorhergehenden Ansprüche, wobei:
- wenn zu einem ersten Zeitpunkt der vorläufige Steuerungssollwert (C_{QM}, O_{QM}, E_{QM}) nicht mehr den vordefinierten Regeln entspricht, jede Komponente des endgültigen Steuerungssollwerts (C_{B}, O_{B}, E_{B}) diskontinuierlich variiert, und
- wenn zu einem darauf folgenden zweiten Zeitpunkt der vorläufige Steuerungssollwert (C_{QM}, O_{QM}, E_{QM}) wieder den vordefinierten Regeln entspricht, mindestens eine Komponente des endgültigen Steuerungssollwerts (C_{B}, O_{B}, E_{B}) kontinuierlich variiert.

5. Modul (10; 20) nach einem der Ansprüche 1 bis 4, wobei die Prüfdaten (D1_{B}; V₁, S₃) alle einen bestimmten Sicherheitslevel vom Typ ASIL aufweisen.

6. Modul (10) nach einem der Ansprüche 1 bis 4, wobei höchstens eines der Prüfdaten einen Sicherheitslevel aufweist, der geringer als derjenige der anderen Prüfdaten ist.

7. Modul (10) nach einem der Ansprüche 1 bis 6, wobei der endgültige Steuerungssollwert (C_{B}, O_{B}, E_{B}) ein Drehmoment (C_{B}) umfasst, das an einen Aktor eines Antriebsstrangs oder eines Bremssystems zu übertragen ist, so dass eine automatische Geschwindigkeitsregelung des Kraftfahrzeugs (1) gewährleistet wird.

8. Modul (20) nach einem der Ansprüche 1 bis 6, wobei der endgültige Steuerungssollwert (S_{B}) ein Warnsignal (S_{B}) umfasst, das es ermöglicht, eine Mensch-Maschine-Schnittstelle zu aktivieren, wenn der Fahrer (5) des Kraftfahrzeugs (1) nicht mehr auf sein Fahren konzentriert ist und eine Funktion zum Halten des Kraftfahrzeugs (1) in der Mitte seiner Fahrspur aktiviert ist.

9. Modul (10; 20) nach einem der Ansprüche 1 bis 8, wobei das Sicherungsmodul dazu angepasst ist, die Zeit, die vergangen ist, seit der Fahrer (5) des Kraftfahrzeugs (1) nicht mehr auf sein Fahren konzentriert ist, in einer ganzen Anzahl von Zyklen zu zählen.

10. Verfahren zur Berechnung eines endgültigen Steuerungssollwerts (C_{B}, O_{B}, E_{B}; S_{B}) für eine Kraftfahrzeugausrüstung (1), umfassend:
- das Empfangen eines Satzes von Eingangsdaten (D1_{QM}, D1_{B}), die sich auf das Kraftfahrzeug und sein Umfeld beziehen, von einem Hauptblock (100; 500),
- das Berechnen eines vorläufigen Steuerungssollwertes (C_{QM}, O_{QM}, E_{QM}; S_{QM}) durch den Hauptblock (100; 500) in Abhängigkeit von den Eingangsdaten (D1_{QM}, D1_{B}),
- das Empfangen des vorläufigen Steuerungssollwerts (C_{QM}, O_{QM}, E_{QM}; S_{QM}) und eines Satzes von Prüfdaten (D1_{B}; V₁, S₃) durch einen von dem Hauptblock (100; 500) verschiedenen Sicherungsblock (200; 600),
- das Berechnen des endgültigen Steuerungssollwerts (C_{B}, O_{B}, E _{B}; S_{B}), welches das Kontrollieren umfasst, dass der vorläufige Steuerungssollwert (C_{QM}, O_{QM}, E_{QM}; S_{QM}) einem Satz aus mindestens einer vordefinierten Regel entspricht, wobei sich der Satz der Prüfdaten (D1_{B}) von dem Satz der Eingangsdaten (D1_{QM}, D1_{B}) unterscheidet, und **dadurch gekennzeichnet, dass** jedes der Prüfdaten (D1_{B}; V₁, S₃) einen Sicherheitslevel aufweist, der strikt größer als ein Sicherheitslevel mindestens eines der Eingangsdaten (D1_{QM}, D1_{B}) ist.

## Claims

1. Driving assistance module (10; 20) for a motor vehicle (1), comprising:
- a main block (100; 500) that receives, at input, a set of input data (D1_{QM}, D1_{B}) relating to the motor vehicle and to its environment, and that provides, at output, a preliminary control setpoint (C_{QM}, O_{QM}, E_{QM}; S_{QM}) for the motor vehicle (1) on the basis of the input data (D1_{QM}, D1_{B}), and
- a safeguarding block (200; 600) for safeguarding the preliminary control setpoint (C_{QM}, O_{QM}, E_{QM}; S_{QM}), which safeguarding block is separate from the main block (100; 500) and receives, at input, the preliminary control setpoint (C_{QM}, O_{QM}, E_{QM}; S_{QM}) and a set of check data (D1_{B}; V₁, S₃), provides, at output, a final control setpoint (C_{B}, O_{B}, E_{B}; S_{B}) and checks that the preliminary control setpoint (C_{QM}, O_{QM}, E_{QM}; S_{QM}) is in accordance with a set of at least one predefined rule,
wherein the set of check data (D1_{B}) differs from the set of input data (D1_{QM}, D1_{B}), and **characterized in that** each of the check data (D1_{B}; V₁, S₃) has a safety level strictly higher than a safety level of at least one of the input data (D1_{QM}, D1_{B}).

2. Module (10) according to Claim 1, wherein the final control setpoint (C_{B}, O_{B}, E_{B}) is equal to the preliminary control setpoint (C_{QM}, O_{QM}, E_{QM}) when the preliminary control setpoint (C_{QM}, O_{QM}, E_{QM}) is in accordance with the predefined rules and, if not, is equal to a predetermined safety setpoint (C_{S}, O_{S}, E_{S}).

3. Module (20) according to Claim 1, wherein the safeguarding block (600) is designed to compute an intermediate control setpoint (S_{INT}) and wherein the final control setpoint (S_{B}) is equal to the maximum out of the preliminary control setpoint (S_{QM}) and the intermediate control setpoint (S_{INT}).

4. Module (10) according to one of the preceding claims, wherein:
- when, at a first time, the preliminary control setpoint (C_{QM}, O_{QM}, E_{QM}) is no longer in accordance with the predefined rules, each component of the final control setpoint (C_{B}, O_{B}, E_{B}) varies discontinuously, and
- when, at a subsequent second time, the preliminary control setpoint (C_{QM}, O_{QM}, E_{QM}) is in accordance with the predefined rules again, at least one component of the final control setpoint (C_{B}, O_{B}, E_{B}) varies continuously.

5. Module (10; 20) according to one of Claims 1 to 4, wherein the check data (D1_{B}; V₁, S₃) all have a determined ASIL safety level.

6. Module (10) according to one of Claims 1 to 4, wherein at most one of the check data has a safety level lower than that of the other check data.

7. Module (10) according to one of Claims 1 to 6, wherein the final control setpoint (C_{B}, O_{B}, E_{B}) comprises a torque (C_{B}) to be transmitted to an actuator of a drivetrain or of a braking system so as to carry out a function of automatically adjusting the speed of the motor vehicle (1).

8. Module (20) according to one of Claims 1 to 6, wherein the final control setpoint (S_{B}) comprises a warning signal (S_{B}) for activating a human-machine interface when the driver (5) of the motor vehicle (1) is no longer focusing on their driving and when a function of keeping the motor vehicle (1) in the centre of its traffic lane is activated.

9. Module (10; 20) according to one of Claims 1 to 8, wherein the safeguarding module is designed to count the time that has elapsed for which the driver (5) of the motor vehicle (1) has no longer been focusing on their driving, in the form of a whole number of cycles.

10. Method for computing a final control setpoint (C_{B}, O_{B}, E_{B}; S_{B}) for a motor vehicle (1) equipment, comprising:
- a main block (100; 500) receiving a set of input data (D1_{QM}, D1_{B}) relating to the motor vehicle and to its environment,
- the main block (100; 500) computing a preliminary control setpoint (C_{QM}, O_{QM}, E_{QM}; S_{QM}) on the basis of the input data (D1_{QM}, D1_{B}),
- a safeguarding block (200; 600), separate from the main block (100; 500), receiving the preliminary control setpoint (C_{QM}, O_{QM}, E_{QM}; S_{QM}) and a set of check data (D1_{B}; V₁, S₃),
- computing the final control setpoint (C_{B}, O_{B}, E_{B}; S_{B}), which comprises checking that the preliminary control setpoint (C_{QM}, O_{QM}, E_{QM}; S_{QM}) is in accordance with a set of at least one predefined rule, wherein the set of check data (D1_{B}) differs from the set of input data (D1_{QM}, D1_{B}), and **characterized in that** each of the check data (D1_{B}; V₁, S₃) has a safety level strictly higher than a safety level of at least one of the input data (D1_{QM}, D1_{B}).
